Europäisches Patentamt

(19) European Patent Office

Office européen des brevets

(11) Publication number: **0 276 311**
**B1**

(12) **EUROPEAN PATENT SPECIFICATION**

(45) Date of publication of patent specification: **22.08.90**

(21) Application number: **87901623.6**

(22) Date of filing: **12.02.87**

(86) International application number:
**PCT/JP87/00088**

(87) International publication number:
**WO 87/07593 17.12.87 Gazette 87/28**

(51) Int. Cl.⁵: **C 03 B 37/012,** C 03 B 20/00,
G 02 B 6/00

(54) **METHOD FOR MANUFACTURING BASIC MATERIAL FOR OPTICAL FIBER.**

(30) Priority: **11.06.86 JP 133761/86**

(43) Date of publication of application:
**03.08.88 Bulletin 88/31**

(45) Publication of the grant of the patent:
**22.08.90 Bulletin 90/34**

(84) Designated Contracting States:
**DE FR GB**

(56) References cited:
**EP-A-0 125 828**
**EP-A-0 176 263**
**AT-A- 360 191**
**JP-B- 603 020**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **TANAKA, Gotaro Yokohama Works of Sumitomo**
**Electric Industries, Ltd. 1, Taya-cho Sakae-ku**
**Yokohama-shi, Kanagawa 244 (JP)**
Inventor: **YOKOTA, Hiroshi Yokohama Works of Sumitomo**
**Electric Industries, Ltd. 1, Taya-cho Sakae-ku**
**Yokohama-shi, Kanagawa 244 (JP)**
Inventor: **TANAKA, Shigeru Yokohama Works of Sumitomo**
**Electric Industries, Ltd. 1, Taya-cho Sakae-ku**
**Yokohama-shi, Kanagawa 244 (JP)**
Inventor: **KANAMORI, Hiroo Yokohama Works of Sumitomo**
**Electric Industries, Ltd. 1, Taya-cho Sakae-ku**
**Yokohama-shi, Kanagawa 244 (JP)**
Inventor: **SUGANUMA, Hiroshi Yokohama Works of Sumitomo**
**Electric Industries, Ltd. 1, Taya-cho Sakae-ku**
**Yokohama-shi, Kanagawa 244 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

# EP 0 276 311 B1

**Description**

Technical Field

The present invention relates to a method for producing a preform for an optical fiber according to the preamble of claim 1. More particularly, it relates to a method for producing a glass preform which is suitable for the fabrication of a single mode optical fiber having zero dispersion wavelength at least in a 1.5 $\mu$m wavelength band.

Background Art

Attenuation of light transmission through a quartz type glass fiber is minimum in a wavelength range of 1.5 to 1.6 $\mu$m. Therefore, in a transmission system comprising an optical fiber, it is necessary to use light having a wavelength in the above 1.5 $\mu$m band to maximize a junction interval.

When light in the 1.5 $\mu$m band is used, to transmit informations at high transmission speed, a single mode fiber is used since it has a much wider transmission range than a multi mode optical fiber. Then, to transmit the information at a very high transmission speed, it is necessary to minimize dispersion effect of the fiber at a wavelength to be used.

A usually used single mode fiber for the wavelength of 1.3 $\mu$m is designed so that dispersion due to a material and dispersion due to a structure compensate each other near the wavelength of 1.3 $\mu$m to make the sum of dispersion zero.

When the single mode fiber is used in the 1.5 $\mu$m band, there are two ways for decreasing the dispersion in this band. One of them is to design the structure of the fiber so that the zero dispersion is achieved in the 1.5 $\mu$m band. Another is to use a light source having very narrow spectrum at a wavelength used in the 1.5 $\mu$m band.

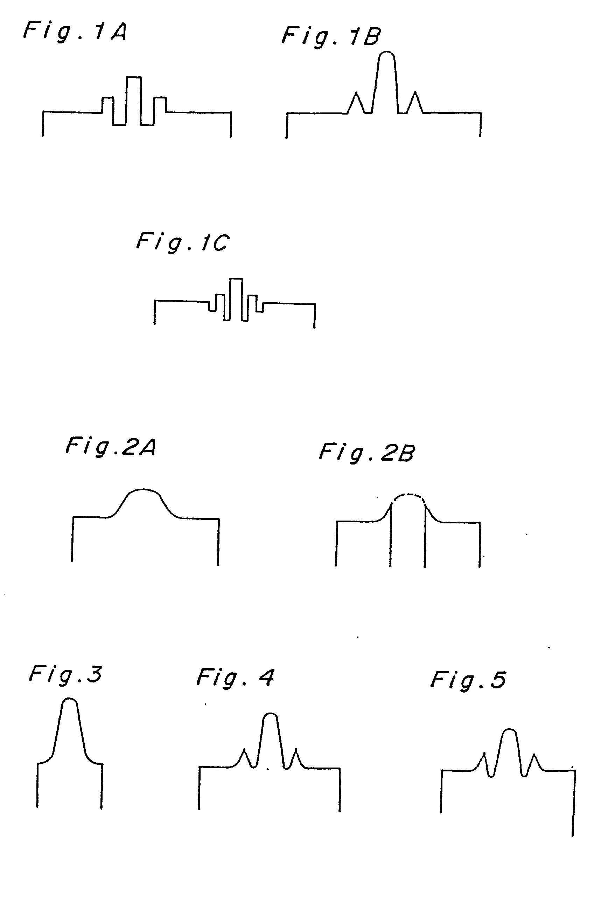

Among them, when the dispersion in the 1.5 $\mu$m band is decreased by the former way, it is necessary for the optical fiber to have a specific profile of refractive index distribution. Typical examples of such refractive index profile are shown in Figs. 1A, 1B and 1C.

Figs. 1A and 1C are examples of the refractive index profiles wherein the dispersion is low in the 1.5 $\mu$m band and a wider wavelength range near said band. The optical fiber having such refractive index profiles can advantageously be used at other wavelength, and is more advantageous for multiplex wavelength transmission and the like.

As the production method of the optical fiber having the refractive index profile of Fig. 1, there are known the MCVD method (Modified Chemical Vapor Deposition method) and the OVD method (Outside Vapor Deposition method). These methods are described in, for example, U.S. Patent Nos. 4,504,299 and 3,775,075, respectively.

In these methods, layers of glass soot particles having different refractive indexes are synthesized and deposited on an inner or outer surface of a starting member to achieve a desired refractive index profile, a produced tubular preform is collapsed to form a cylindrical preform which is drawn to fabricate an optical fiber.

Although an optical fiber having comparatively good characteristics can be fabricated by these conventional methods, it is rather difficult to precisely form the refractive index profile since the portion the refractive indexes of which should be varied is the center portion of a thickness of about 10 $\mu$m and very thin in contrast to about 125 $\mu$m of the outer diameter of the optical fiber. In the above described methods, a dopant for adjusting the refractive index tends to dissipate from the inner surface of the tubular preform when the tubular preform having the refractive index profile is collapsed to form the cylindrical rod-like preform, whereby the refractive index profile at the center part of the cylindrical rod-like preform is altered.

By the conventional VAD method (Vapor Phase Axial Deposition method) (cf. Japanese Patent Publication No. 33327/1981), it is rather difficult to produce a preform having plurality of local maximum and minimum points in the refractive index profile as shown in Figs. 1A, 1B and 1C.

EP—A—0 176 263, upon which the preamble of claim 1 is based, describes a tubular porous silica preform, in which a tubular glass member is formed and a glass cylinder is formed, both having a refractive index profile symmetric around its axis and the glass rod is inserted in that tubular glass member followed by heating and fusing them to integrate them together. The glass cylinder is formed by depositing particulate silica on an end surface of a support body.

The present invention provides a method for producing a glass preform for an optical fiber having such refractive index profiles shown in Figs. 1A, 1B and 1C which can cope with the above described drawbacks of the conventional methods.

The present invention relates to a method for producing a glass preform for an optical fiber, comprising forming a tubular glass member having a refractive index profile symmetric around its axis, forming a glass cylinder having a refractive index profile symmetry around its axis by the VAD method in a separate step, and inserting the glass rod in said tubular glass member followed by heating and fusing them to ingrate them together, characterized in that said glass cylinder is drawn to a desired diameter to form a drawn rod before insertion in said tubular glass member.

According to the present invention, the cylindrical glass rod having the refractive index profile corresponding to a core and a first cladding by the VAD method, the glass rod is drawn to reduce its diameter and inserted in the glass tube having a concentric refractive index distribution around its axis, and

2

then they are heated and integrated to form a glass preform for an optical fiber.

As a method for forming the glass tube having a concentric refractive index distribution around the axis of the tube, there can be used the conventional MCVD or OVD method. Preferably, a glass rod having a refractive index profile as shown in Fig. 2A is produced by the conventional VAD method and then it is bored around the center axis to form a glass tube having a refractive index profile as shown in Fig. 2B. As an additive for providing refractive index distribution, $GeO_2$, fluorine and the like may be used.

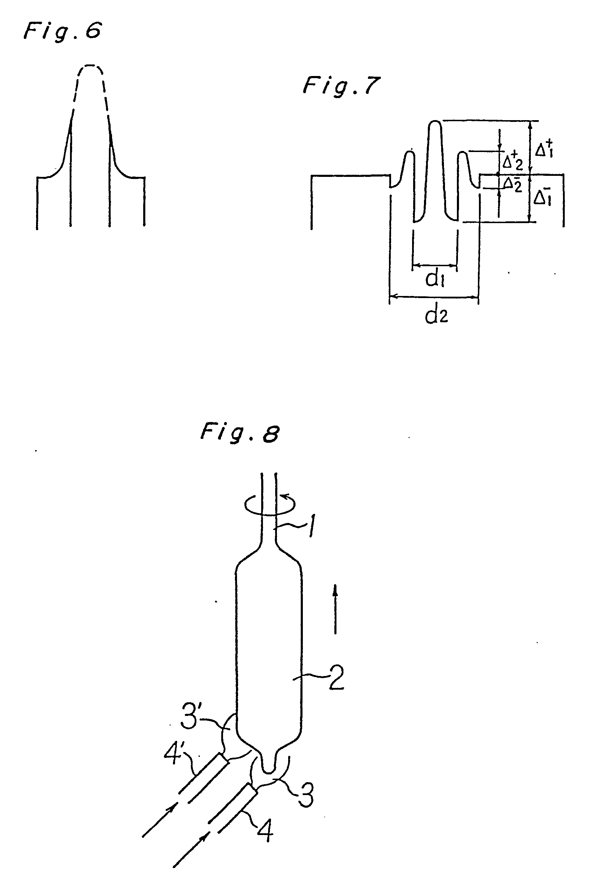

As the conventional VAD method, there is a method comprising introducing a glass-forming raw material gas into flames 3,3' such as oxyhydrogen flames or plasma flames as shown in Fig. 8 to synthesize glass soot particles, and depositing the glass soot particles on a starting member 1 which is pulled up with rotation in the arrow direction to form a glass soot preform 2. Fig. 8 shows a method in which two burners 4,4' are used. Details of the VAD method are described in, for example, U.S. Patent No. 4,224,046, 4,367,085 and 4,345,928.

To bore the portion around the center axis of the glass rod, any of the conventional methods can be used. For example, an ultrasonic boring method, a laser method, a hydrogen fluoride etching method, a drilling method and the like may be used.

Drawing of the glass rod to be inserted in the glass tube may be carried out by a conventional method, preferably by heating the glass rod in an atmosphere not containing water. As a heating source, a resistance furnace, plasma flame, etc. may be used.

After inserting the drawn cylindrical rod in the glass tube, they are heated to collapse the glass tube so as to fuse it with the cylindrical rod to integrate them to form the glass preform for the optical fiber. Collapsing of the glass tube can be carried out by heating outside of the glass tube at temperature of about 1,700 to 2,000°C with introducing a dehydrating gas (e.g. $Cl_2$, $SOCl_2$, $SiF_4$, etc.) in the tube to shrink the glass tube and finally fusing the glass tube onto the glass rod. When the glass tube is collapsed with keeping the interior of the glass tube at reduced pressure of 2 to 50 $mmH_2O$ below atmospheric pressure, the fusing is easily carried out. Collapsing may be carried out by a conventional rod-in-tube method, which is disclosed in, for example, Japanese Patent Kokai Publication Nos. 117126/1986 and 227938/1986.

Preferably, the inner surface of the glass tube is etched prior to collapsing. As an etchant gas, a conventionally used halogen-containing compound (e.g. $SF_6$, a mixture of $Cl_2$ and oxygen) is preferably used. Etching temperature is from about 1,200 to 1,800°C.

In the present invention, since the part corresponding to the center portion of the optical fiber (the glass rod) is formed by the VAD method, the refractive index profile of the center portion of the optical fiber is not influenced by volatilization of components in the collapsing step, whereby said profile is not distorted. Further, since the glass preform having the desired refractive index profile is drawn and used as a thin glass rod, the refractive index profile in a small domain like a core of a single mode optical fiber is attained as precisely as in the glass member produced by the VAD method. Therefore, according to the present invention, it is possible to form a complicate refractive index profile in the radical direction such as a refractive index profile having plural local maximum and/or minimum points by a combination of a few simple steps. Therefore, it is easy to achieve the refractive index profile of Figs. 1A, 1B and 1C which are not precisely achieved by the conventional method, and the glass preform for use in the fabrication of the single mode optical fiber having zero dispersion at least the 1.5 μm band is advantageously produced.

Preferred Embodiments of the Invention

Example 1

By the VAD method utilizing two burners as shown in Fig. 8, glass soot particles were synthesized and sintered to produce a glass rod having a refractive index profile in the radial direction as shown in Fig. 2A and properties of No. 1 in Table 1.

Table 1

| No. | Outer diameter of glass rod (cladding diameter) | Core diameter | Specific refractive index difference (core/cladding) | Core composition | Cladding composition |
|---|---|---|---|---|---|
| 1 | 40 mm | 8 mm | 0.4 % | $GeO_2$-$SiO_2$ | $SiO_2$ |
| 2 | 36 mm | 21 mm | 0.9 % | $GeO_2$-$SiO_2$ | $SiO_2$ |
| 3 | 36 mm | 21 mm | 0.9 % | $GeO_2$-F-$SiO_2$ | F-$SiO_2$ Refractive index difference from pure $SiO_2$: 0.2 % |
| 4 | 32 mm | 28 mm | 0.9 % | $GeO_2$-F-$SiO_2$ | F-$SiO_2$ Refractive index difference from pure $SiO_2$: 0.15 % |
| 5 | 32 mm | 16 mm | 0.9 % | $GeO_2$-F-$SiO_2$ | F-$SiO_2$ Refractive index difference from pure $SiO_2$: 0.45 % |

# EP 0 276 311 B1

In the center part of the glass rod, a bore having an inner diameter of 6 mm was made by an ultrasonic boring machine. After the inner surface of the bore was washed, it was gas phase etched by flowing $SF_6$ in the bore with heating. The refractive index profile of the glass tube in the radial direction is shown in Fig. 2B.

By the same VAD method utilizing two burners as described above, a glass rod having the refractive index profile as shown in Fig. 3 and properties of No. 2 in Table 1 was produced.

The glass rod was drawn in a resistance furnace to an outer diameter of 6 mm and inserted in the glass tube produced in the above. Then, they were fused together with etching the interfacial surfaces with keeping the surfaces clean by flowing $SF_6$ at a flow rate of 300 ml/min., $Cl_2$ at a flow rate of 200 ml/min., and oxygen at a flow rate of 300 ml/min. at 1,600°C.

By the above procedures, a glass rod having the refractive index profile as shown in Fig. 4 was produced. Then, the glass rod was heated and drawn and jacketed with a quartz glass tube to form a glass preform for an optical fiber, which was drawn by a draw bench to fabricate an optical fiber.

The fabricated single mode optical fiber had characteristics such as spot size of 10 μm, cut off wavelength of 1.20 μm and zero dispersion wavelength of 1.548 μm, and its attenuation of light transmission at the wavelength of 1.55 μm was 0.25 dB/km.

Example 2

By the VAD method utilizing two burners, a soot preform having a core composition of $GeO_2$—$SiO_2$ and a cladding composition of $SiO_2$ was produced. It was charged in a furnace, heated to 1,200°C with flowing helium at a flow rate of 15 l/min., kept at 1,200°C with flowing $SF_6$ at a flow rate of 100 ml/min. and helium at a flow rate of 15 l/min, for 3 hours, heated from 1,200°C to 1,500°C with flowing only helium at a flow rate of 15 l/min., and kept at 1,500°C for 30 minutes to produce a glass rod having the properties of No. 3 in Table 1.

In the same manner as in Example 1 but using the above produced glass rod, a glass rod was produced and then an optical fiber was fabricated therefrom. The refractive index profiles of the glass rod produced by the VAD method and of the glass rod after fused together with the glass rod are shown in Fig. 5. The fabricated optical fiber had characteristics such as spot size of 10 μm, cut off wavelength of 1.20 μm and zero dispersion wavelength of 1.545 μm, and its attenuation of light transmission at the wavelength of 1.55 μm was 0.23 dB/km.

Example 3

By the VAD method utilizing two burners, a soot preform having a core composition of $GeO_2$—$SiO_2$ and a cladding composition of $SiO_2$. It was charged in a furnace and heated with flowing $SiF_4$ gas at a flow rate of 1.3 l/min. and helium at a flow rate of 10 l/min. to produce a glass rod having the properties of No. 4 in Table 1. At the center part of the glass rod, a bore having an inner diameter of 15 mm was made by the ultrasonic boring machine. After the inner surface of the bore was washed, it was gas phase etched by flowing $SF_6$ in the bore and heated and drawn to an outer diameter of 16 mm. The refractive index profile of the glass tube in the radial direction is shown in Fig. 6.

By the same VAD method as above but changing a core/cladding ratio and flow rates of $SiF_4$ and helium in the fluorine addition step to 0.06 l/min. and 20 l/min., respectively, a glass rod having the properties of No. 5 in Table 1 was produced, drawn to an outer diameter of 7 mm, inserted in the above produced glass tube and heated and fused together in the same manner as in Example 1 to form a glass rod. The glass rod was jacketed with a quartz glass tube to form a glass preform for an optical fiber. The preform was drawn by the draw bench to fabricate an optical fiber.

The refractive index profile and properties of the fabricated single mode optical fiber are shown in Fig. 7 and Table 2, respectively. In Table 2, $\Delta_1^+$, $\Delta_1^-$, $\Delta_2^+$ and $\Delta_2^-$ represent specific refractive difference from the refractive index of the outer cladding layer, respectively.

The zero distribution wavelengths of this fiber were 1.32 μm and 1.58 μm, and had good characteristics such that the dispersion value was less than 5 ps/km.nm in a wide wavelength range between those wavelengths.

Table 2

| $d_1$ | $d_2$ | $\Delta_1^+$ | $\Delta_1^-$ | $\Delta_2^+$ | $\Delta_2^-$ |
|---|---|---|---|---|---|
| 8 μm | 32 μm | 0.45 % | −0.45 % | 0.2 % | 0.15 % |

According to the present invention, a glass preform for a single mode optical fiber which can be used in the 1.5 μm band is produced with precise refractive index profile, and a preform having complicated refractive index structure can be produced by a few simple steps. Thereby, a single mode optical fiber having zero dispersion in the 1.5 μm band can be produced.

5

Brief Description of the Drawings

Figs. 1A, 1B and 1C are graphs showing refractive index profiles in a radial direction of single mode optical fibers produced according to the present invention,

Figs. 2A and 2B are graphs showing refractive index profiles in a radial direction of the glass rod of Example 1 shown as No. 1 in Table 1 and of the glass tube made by boring said glass rod, respectively,

Fig. 3 is a graph showing a refractive index profile in a radial direction of the glass rod of Example 1 shown as No. 2 in Table 1,

Fig. 4 is a graph showing a refractive index profile in a radial direction of the glass rod made by heating and fusing together the glass tube and the drawn glass rod of Example 1,

Fig. 5 is a graph showing a refractive index profile in a radial direction of the glass rod made by heating and fusing together the glass tube and the drawn glass rod of Example 2,

Fig. 6 is a graph showing a refractive index profile in a radial direction of the glass tube made from the glass rod of Example 3 shown as No. 4 in Table 1,

Fig. 7 is a graph showing a refractive index profile in a cross section of the optical fiber produced in Example 3, and

Fig. 8 schematically shows the usual VAD method.

**Claims**

1. A method of producing a glass preform for an optical fiber, comprising forming a tubular glass member having a refractive index profile symmetric around its axis, forming a glass cylinder having a refractive index profile symmetric around its axis by the VAD method in a separate step, and inserting the glass rod in said tubular glass member followed by heating and fusing them to integrate them together, characterized in that said glass cylinder is drawn to a desired diameter to form a drawn rod before insertion in said tubular glass member.

2. The method according to claim 1, wherein the tubular glass member is one which has been produced by boring a center portion along the axis of a cylindrical glass member having a refractive index profile symmetric around its axis.

**Patentansprüche**

1. Verfahren zur Herstellung einer Glasvorform für eine optische Faser, umfassend das Ausbilden eines rohrförmigen Glasteiles mit einem Brechungsindexprofil symmetrisch um dessen Achse, Ausbilden eines Glaszylinders mit einem Brechungsindexprofil symmetrisch um dessen Achse mittels der VAD-Methode in einer getrennten Stufe und Einsetzen des Glasstabs in den rohrförmigen Glasteil und anschließendes Erhitzen und Verschmelzen derselben, um diese miteinander zu integrieren, dadurch gekennzeichnet, daß der Glaszylinder auf einen gewünschten Durchmesser gezogen wird unter Ausbildung eines gezogenen Stabes vor dem Einsetzen in den rohrförmige Glasteil.

2. Verfahren gemäß Anspruch 1, bei dem der rohrförmige Glasteil ein solcher ist, der hergestellt wurde durch Bohren eines Mittelteiles längs der Achse eines zylindrischen Glasteiles mit einem Brechungsindexprofil symmetrisch um dessen Achse.

**Revendications**

1. Procédé de production d'une ébauche en verre pour une fibre optique, qui comprend la formation d'un élement tubulaire en verre ayant un profil d'indice de réfraction symétrique autour de son axe, la formation d'un cylindre en verre ayant un profil d'indice de réfraction symétrique autour de son axe par le procédé de dépôt axial en phase gazeuse (VAD) dans une étape séparée, et l'insertion de la barre de verre dans ledit élément tubulaire en verre puis leur chauffage et leur fusion pour les rendre solidaires, caractérisé en ce que ledit cylindre en verre est étiré jusqu'à un diamètre souhaité pour former une barre étirée avant son insertion dans ledit élément tubulaire en verre.

2. Procédé selon la revendication 1, dans lequel l'élement tubulaire en verre est un élément qui a éte produit en perçant une partie centrale suivant l'axe d'un élément cylindrique en verre ayant un profil d'indice de réfraction symétrique autour de son axe.

*Fig.1A*

*Fig.1B*

*Fig.1C*

*Fig.2A*

*Fig.2B*

*Fig.3*

*Fig.4*

*Fig.5*

*Fig.6*

*Fig.7*

*Fig.8*